# EUROPÄISCHE PATENTSCHRIFT

(11) **EP 2 991 831 B1**
(45) Veröffentlichungstag und Bekanntmachung des Hinweises auf die Patenterteilung: **22.02.2017**
(21) Anmeldenummer: 14715247.4
(22) Anmeldetag: 27.03.2014
(51) Int. Cl.: B41F 33/00, G06K 9/20, B41J 13/00, H04N 1/028, H04N 1/195, G01N 21/89, G01N 21/898

(54) **ANORDNUNG ZUR AUFNAHME EINES BILDES VON EINER BEDRUCKSTOFFBAHN**
ARRANGEMENT FOR CAPTURING AN IMAGE OF A PRINTING SUBSTRATE WEB
DISPOSITIF POUR ACQUÉRIR UNE IMAGE D'UNE BANDE DE MATIÈRE À IMPRIMER

(30) Priorität: 29.04.2013 DE 202013101851 U
(43) Veröffentlichungstag der Anmeldung: 09.03.2016
(73) Patentinhaber: BST eltromat International GmbH, 33739 Bielefeld (DE)
(72) Erfinder: RECKEFUß, Klaus, 33818 Leopoldshöhe (DE); BÖTTCHER, Frank, 33415 Verl (DE)
(74) Vertreter: Ter Meer Steinmeister & Partner
(86) Internationale Anmeldenummer: PCT/EP2014/056235
(87) Internationale Veröffentlichungsnummer: WO 2014/177326

(56) Entgegenhaltungen:
- EP-A1- 1 940 141
- EP-A2- 0 338 442
- EP-A2- 1 619 026
- EP-A2- 2 468 508
- DE-A1-102006 016 209

## Beschreibung

Die Erfindung betrifft eine Anordnung zur Aufnahme eines Bildes von einer Bedruckstoffbahn in einer Druckmaschine, mit einer Kamera, die ein sich parallel zu der Bedruckstoffbahn ersteckendes Sensorfeld und ein Objektiv aufweist, dessen optische Achse rechtwinklig zu dem Sensorfeld verläuft, und mit einer Lichtquelle, die so in Bezug auf die Bedruckstoffbahn angeordnet ist, dass das von ihr emittierte Licht von reflektierenden Oberflächenteilen der Bedruckstoffbahn hauptsächlich in die Kamera reflektiert wird.

Eine solche Bildaufnahmeanordnung wird in DE 10 2006 016209 A1 beschrieben und dient beispielsweise zur Erzeugung eines Rückkopplungssignals für einen Registerregler in einer Druckmaschine. Die Lichtquelle sollte so angeordnet sein, dass sich ein guter Bildkontrast ergibt, insbesondere auch in den Fällen, in denen die Bedruckstoffbahn eine reflektierende Oberfläche oder zumindest reflektierende Oberflächenanteile hat, beispielsweise wenn die Bedruckstoffbahn eine reflektierende Folie ist oder metallisiert ist oder mit einem reflektierenden Lack bedruckt ist.

Zur Herstellung eines guten Kontrasts zwischen Untergrund (Bedruckstoff) und dem Aufdruck (Druckbild) sind einerseits Hellfeldbeleuchtungen bekannt, bei der alle spiegelnden Anteile im Bild dunkler dargestellt werden, und andererseits sogenannte koaxiale Beleuchtungen, bei denen die Strahlengänge von der Lichtquelle zur Bedruckstoffbahn und von der Bedruckstoffbahn zur Kamera koaxial verlaufen, so dass das Licht der Lichtquelle direkt in die Kamera reflektiert wird und folglich die spiegelnden Anteile hell dargestellt werden. Eine solche koaxiale Beleuchtung wird bisher mit Hilfe von halbdurchlässigen Spiegeln realisiert, da andernfalls die Kamera die Lichtquelle abschatten würde oder umgekehrt die Lichtquelle die Kamera abschatten würde. Anordnungen mit halbdurchlässigem Spiegel bringen jedoch sehr hohe Lichtverluste mit sich.

Eine andere bekannte Möglichkeit besteht darin, Lichtquellen kreisförmig um die optische Achse des Kameraobjektivs herum anzuordnen. In dem Fall lässt sich jedoch keine homogene Ausleuchtung des Bildfeldes erreichen.

Aufgabe der Erfindung ist es, eine koaxiale Beleuchtungsanordnung mit homogener Bildfeldausleuchtung und geringen Lichtverlusten zu schaffen.

Diese Aufgabe wird dadurch gelöst, dass das Objektiv derart versetzt zum Sensorfeld angeordnet ist, dass eine durch die Mitte des Sensorfeldes und die Mitte des Objektivs verlaufende Gerade und eine Gerade, die von der Mitte der Lichtquelle zum Zentrum des Lichteinfalls auf dem Bildfeld auf der Bedruckstoffbahn verläuft, gleiche Winkel mit dem Einfallslot bilden.

Bei dieser Anordnung wird das von der Lichtquelle emittierte Licht an den spiegelnden Oberflächenanteilen der Bedruckstoffbahn nach dem Prinzip "Einfallswinkel gleich Ausfallswinkel" direkt in die Kamera reflektiert. Andererseits sind jedoch das Sensorfeld und das Objektiv der Kamera parallel zur Ebene der Bedruckstoffbahn ausgerichtet, so dass sich allenfalls minimale Bildverzerrungen ergeben. Aufgrund des Versatzes zwischen Objektiv und Sensorfeld erhält man für Bildbereiche, die abseits des Zentrums des Lichteinfalls liegen, leicht unterschiedliche optische Weglängen. Durch geeignete Wahl der Brennweite des Objektivs und geeignete Einstellung des Abstands zwischen dem Sensorfeld und dem Objektiv lässt sich jedoch erreichen, dass das Bild auf der gesamten Bildfläche ausreichend scharf fokussiert ist.

Vorteilhafte Ausgestaltungen der Erfindung sind in den Unteransprüchen angegeben.

Im folgenden wird ein Ausführungsbeispiel anhand der Zeichnung näher erläutert.

Es zeigen:
- Fig. 1: eine Prinzipskizze einer erfindungsgemäßen Bildaufnahmeanordnung in einer Druckmaschine; und
- Fig. 2: eine Ansicht der Anordnung nach Fig. 1 aus Richtung der Pfeile II-II in Fig. 1.

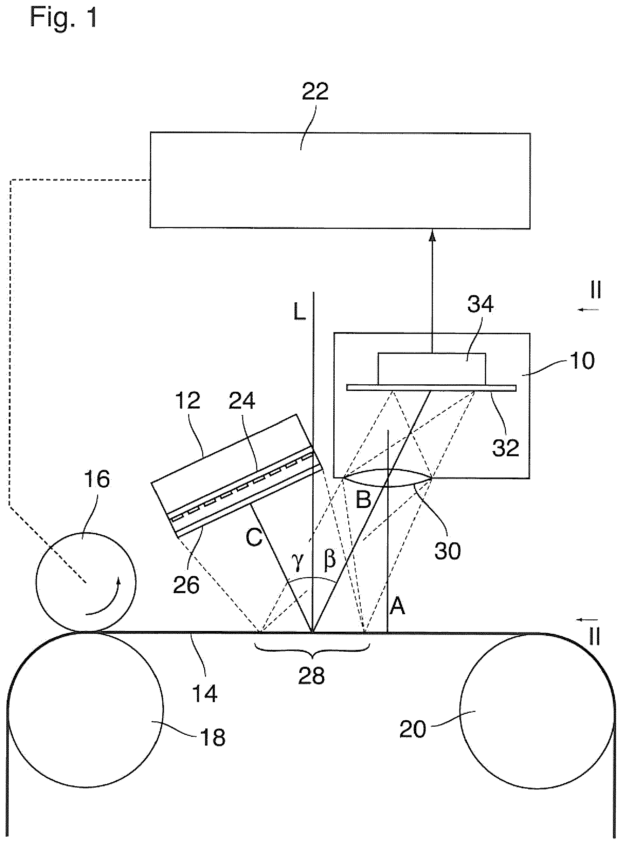

Die in Fig. 1 gezeigte Bildaufnahmeanordnung umfasst eine Kamera 10 und eine Lichtquelle 12, die so in einer Druckmaschine angeordnet sind, dass ein auf eine Bedruckstoffbahn 14 aufgedrucktes Bild aufgenommen und elektronisch ausgewertet werden kann. Von der Druckmaschine sind hier lediglich ein Druckzylinder 16, ein Gegendruckzylinder 18 und ein Führungszylinder 20 gezeigt, über den die Bedruckstoffbahn 14 vom Gegendruckzylinder abgezogen wird. Ein Registerregler 22 wertet das von der Kamera 10 aufgenommene Bild aus und regelt den Antrieb und die laterale Position des Druckzylinders 16 in der Weise, dass das mit dem Druckzylinder 16 gedruckte Farbauszugsbild mit anderen Farbauszügen, die mit anderen, nicht gezeigten Druckwerken auf die Bedruckstoffbahn gedruckt werden, registergerecht überlagert wird.

Die Lichtquelle 12 weist eine mit Leuchtdioden bestückte Platine 24 auf, vor der eine Streuscheibe 26 angeordnet ist, durch die das Licht der Leuchtdioden diffus gestreut wird. Die Lichtquelle ist schräg auf die Oberfläche der Bedruckstoffbahn 14 gerichtet, so dass ein Bildfeld 28 auf dieser Bedruckstoffbahn homogen ausgeleuchtet wird. Eine Gerade C, die von der Mitte der Lichtquelle 12 zum Zentrum des Lichteinfalls auf der Bedruckstoffbahn, d.h., zum Zentrum des Bildfelds 28 verläuft, bildet mit dem Einfallslot L einen von null verschiedenen Winkel γ.

Die Kamera 10 weist ein Objektiv 30 auf, dessen optische Achse A rechtwinklig zur Oberfläche der Bedruckstoffbahn 14 verläuft. In der Bildebene des Objektivs 30 ist ein Sensorfeld 32 angeordnet, beispielsweise ein CCD-Feld. Das von dem Sensorfeld 32 aufgenommene Bild wird von einer Kameraelektronik 34 aufbereitet und an den Registerregler 22 übermittelt.

Erfindungsgemäß geht die optische Achse A des Objektivs nicht durch die Mitte des Sensorfeldes 32, sondern das Objektiv ist derart seitlich versetzt, dass eine Gerade B, die von der Mitte des Sensorfeldes 32 durch die Mitte des Objektivs 30 zum Zentrum des Lichteinfalls im Bildfeld 28 verläuft, mit dem Einfallslot L einen Winkel β bildet, der mit dem Winkel γ übereinstimmt. Das Licht der Lichtquelle 12, das an reflektierenden Oberflächenanteilen der Bedruckstoffbahn 14 reflektiert wird, fällt deshalb längs der Geraden B direkt in die Kamera, so dass entsprechend dem Prinzip einer koaxialen Beleuchtungsanordnung die reflektierenden Oberflächenanteile im Bild hell erscheinen. Da jedoch andererseits des Sensorfeld 32 parallel zur Oberfläche der Bedruckstoffbahn ausgerichtet ist und die optische Achse der Linse rechtwinklig zur Bedruckstoffbahn verläuft, werden trotz des "schrägen Blickwinkels" Bildverzerrungen weitgehend vermieden. Insgesamt lässt sich so ohne halbdurchlässige Spiegel und deshalb mit hoher Lichtausbeute eine verzerrungsarme Bildaufnahme mit koaxialer Beleuchtung realisieren.

Im gezeigten Beispiel sind die Platine 24 und die dazu parallele Streuscheibe 26 der Lichtquelle derart schräggestellt, dass sie rechtwinklig zu der Geraden C verlaufen. Es wäre jedoch auch eine Anordnung denkbar, bei der die Platine 24 und die Streuscheibe 26 parallel zur Bedruckstoffbahn 14 angeordnet sind.

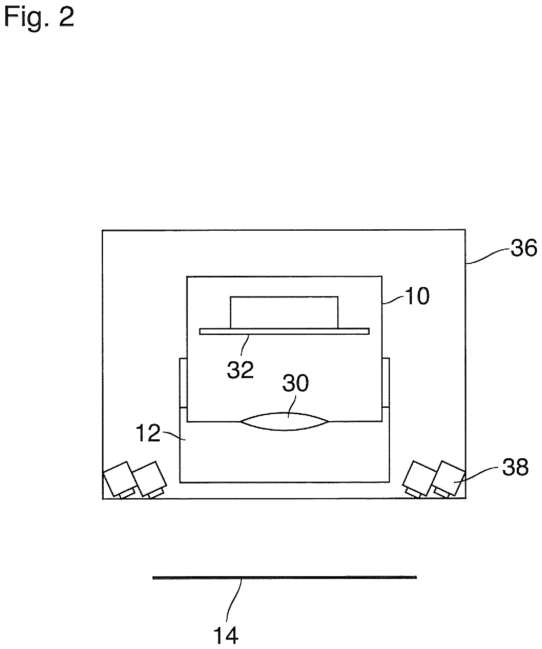

In Fig. 2 ist die Bildaufnahmeanordnung in einer Ansicht aus Richtung der Pfeile II-II in Fig. 1 dargestellt. Gezeigt ist hier auch ein Gehäuse 36, in dem die Kamera 10 und die Lichtquelle 12 positionsgerecht montiert sind und das zur Bedruckstoffbahn 14 hin offen ist. Weiterhin erkennt man in Fig. 2, dass das Objektiv 30 in der Richtung senkrecht zur Zeichenebene in Fig. 1 (in seitlicher Richtung in Fig. 2) auf das Sensorfeld 32 zentriert ist.

Im gezeigten Beispiel nimmt das Gehäuse 36 zusätzlich zu der Lichtquelle 12 noch eine Hellfeldbeleuchtung 38 auf, die durch symmetrisch beiderseits des Objektivs 30 angeordnete LED-Zeilen gebildet wird. Das Licht dieser LED-Zeilen wird durch die reflektierenden Oberflächenanteile der Bedruckstoffbahn 14 nicht in die Kamera 10 reflektiert, so dass die Kamera von diesen LED-Zeilen im wesentlichen nur das Licht empfängt, das an nichtreflektierenden Oberflächenanteilen der Bedruckstoffbahn diffus gestreut wird.

## Patentansprüche

1. Anordnung zur Aufnahme eines Bildes von einer Bedruckstoffbahn (14) in einer Druckmaschine, mit einer Kamera (10), die ein sich parallel zu der Bedruckstoffbahn erstreckendes Sensorfeld (32) und ein Objektiv (30) aufweist, dessen optische Achse (A) rechtwinklig zu dem Sensorfeld (32) verläuft, und mit einer Lichtquelle (12), die so in Bezug auf die Bedruckstoffbahn (14) angeordnet ist, dass das von ihr emittierte Licht von reflektierenden Oberflächenanteilen der Bedruckstoffbahn hauptsächlich in die Kamera (12) reflektiert wird, **dadurch gekennzeichnet, dass** das Objektiv (30) derart versetzt zu dem Sensorfeld (32) angeordnet ist, dass eine durch die Mitte des Sensorfeldes (32) und die Mitte des Objektivs (30) verlaufende Gerade (B) und eine Gerade (C), die von der Mitte der Lichtquelle (12) zum Zentrum des Lichteinfalls auf dem Bildfeld (28) auf der Bedruckstoffbahn (14) verläuft, gleiche Winkel (β, γ) mit dem Einfallslot (L) bilden.

2. Anordnung nach Anspruch 1, bei der die Lichtquelle (12) eine Anzahl flächig auf einer Platine (24) verteilter lichtaussendender Elemente aufweist.

3. Anordnung nach Anspruch 1 oder 2, bei der die Lichtquelle (12) eine Streuscheibe (26) zur diffusen Streuung des auf die Bedruckstoffbahn (14) fallenden Lichts aufweist.

4. Anordnung nach Anspruch 2 oder 3, bei der die Platine (24) und/oder die Streuscheibe (26) schräg in Bezug auf die Bedruckstoffbahn (14) angeordnet sind.

5. Anordnung nach einem der vorstehenden Ansprüche, mit mindestens einer zusätzlichen Lichtquelle für eine Hellfeldbeleuchtung (38).

## Claims

1. An arrangement for capturing an image of a printing substrate web (14) in a printing machine, comprising a camera (10) that has a sensor field (32) extending parallel to the printing substrate web, and an objective lens (30) an optical axis (A) of which runs at right angles to said sensor field (32), and comprising a light source (12) that is arranged relative to the printing substrate web (14) such that the light emitted therefrom is reflected by reflective surface portions of the printing substrate web mainly into the camera (10), **characterized in that** the objective lens (30) is arranged to be offset from the sensor field (32) such that a straight line (B) extending through the centre of the sensor field (32) and the centre of the objective lens (30) and a straight line (C) extending from the centre of the light source (12) to the centre of the light incident on the image field (28) on the printing substrate web (14) form equal angles (β, γ) with the axis (L) of incidence.

2. The arrangement according to claim 1, wherein the light source (12) has a number of light emitting elements distributed over the surface of a board (24).

3. The arrangement according to claims 1 or 2 wherein the light source (12) has a diffusion disk (26) for diffusing the light that is to impinge onto the printing substrate web (14).

4. The arrangement according to claim 2 or 3, wherein the board (24) and/or the diffusion disk (26) are arranged to be inclined relative to the printing substrate web (14).

5. The arrangement according to any of the preceding claims, comprising at least one additional light source for a bright field illumination (38).

## Revendications

1. Agencement pour capturer une image d'une bande de matière à imprimer (14) dans une machine d'impression, comportant une caméra (10) qui présente un champ de détection (32) s'étendant parallèlement à la bande de matière à imprimer et un objectif (30) dont l'axe optique (A) est perpendiculaire au champ de détection (32), et comportant une source de lumière (12) qui est agencée par rapport à la bande de matière à imprimer (14) de telle sorte que la lumière émise par celle-ci est principalement réfléchie dans la caméra (10) par des parties de surfaces réfléchissantes de la bande de matière à imprimer, **caractérisé en ce que** l'objectif (30) est agencé de manière décalée par rapport au champ de détection (32) de telle sorte qu'une droite (B) passant par le milieu du champ de détection (32) et le milieu de l'objectif (30) et une droite (C) qui s'étend depuis le milieu de la source de lumière (12) jusqu'au centre de la lumière incidente sur le champ d'image (28) sur la bande de matière à imprimer (14) forment des angles (β, γ) égaux avec un axe d'incidence.

2. Agencement selon la revendication 1, dans lequel la source de lumière (12) comporte une pluralité d'éléments émetteurs de lumière répartis sur une surface d'une carte (24).

3. Agencement selon la revendication 1 ou 2, dans lequel la source de lumière (12) comporte un disque de dispersion (26) pour une dispersion diffuse de la lumière incidente sur la bande de matière à imprimer (14).

4. Agencement selon la revendication 2 ou 3, dans lequel la carte (24) et/ou le disque de diffusion (26) sont agencés inclinés par rapport à la bande de matière à imprimer (14).

5. Agencement selon l'une des revendications précédentes, comportant au moins une source de lumière supplémentaire pour un éclairage en fond clair (38).
